(19) Europäisches Patentamt
European Patent Office
Office européen des brevets

(11) **EP 3 150 815 B1**

(12) **FASCICULE DE BREVET EUROPEEN**

(45) Date de publication et mention
de la délivrance du brevet:
**13.06.2018 Bulletin 2018/24**

(51) Int Cl.:
**F01N 3/20** *(2006.01)*    **F01N 11/00** *(2006.01)*
**F02D 41/00** *(2006.01)*

(21) Numéro de dépôt: **16186229.7**

(22) Date de dépôt: **30.08.2016**

(54) **PROCÉDÉ DE SUIVI DE LA CONSOMMATION EN AGENT RÉDUCTEUR D'UN SYSTÈME DE RÉDUCTION CATALYTIQUE SÉLÉCTIVE DANS UNE LIGNE D'ÉCHAPPEMENT D'UN MOTEUR À COMBUSTION INTERNE**

ÜBERWACHUNGSVERFAHREN DES REDUKTIONSMITTELVERBRAUCHS EINES SELEKTIVEN KATALYTISCHEN REDUKTIONSSYSTEMS IN EINEM ABGASSYSTEM EINES VERBRENNUNGSMOTORS

METHOD FOR MONITORING THE REDUCING-AGENT CONSUMPTION OF A SELECTIVE CATALYTIC REDUCTION SYSTEM IN AN EXHAUST LINE OF AN INTERNAL COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.09.2015 FR 1559177**

(43) Date de publication de la demande:
**05.04.2017 Bulletin 2017/14**

(73) Titulaire: **PSA Automobiles SA
78300 Poissy (FR)**

(72) Inventeurs:
• **DENYS, Fabien
92500 RUEIL MALMAISON (FR)**
• **TAIBALY, Moustansir
92700 COLOMBES (FR)**

(56) Documents cités:
**EP-A2- 2 455 598    WO-A1-2014/192863
US-A1- 2013 152 549**

**Description**

La présente invention porte sur un procédé de suivi de la consommation en agent réducteur délivré par un système de réduction catalytique sélective présent dans une ligne d'échappement en sortie d'un moteur à combustion interne. Plus précisément, dans le cadre de l'invention, le moteur à combustion interne est associé à un système de recirculation des gaz d'échappement à une admission du moteur en étant mélangé à de l'air frais contenu dans une ligne d'admission d'air du moteur.

Pour réduire l'émission de substances polluantes d'un véhicule automobile à moteur à combustion interne, il est connu d'équiper les véhicules automobiles d'une circulation de gaz d'échappement afin de récupérer les gaz d'échappement en sortie du moteur et de les réinjecter en entrée du moteur à l'admission d'air. Cette circulation des gaz d'échappement porte communément le nom de système RGE, l'abréviation RGE signifiant Recirculation des Gaz d'Echappement, ce système étant aussi connu sous l'abréviation anglo-saxonne d'EGR.

Dans ce qui va suivre, il sera utilisé indifféremment système de recirculation des gaz d'échappement ou système RGE pour la désignation d'un tel système. De même, certains éléments présentes dans le système comprendront le terme RGE dans leur dénomination comme par exemple vanne RGE pour une vanne de régulation intégrée au système, gaz RGE pour les gaz recirculés par le système et consigne RGE pour la consigne d'ouverture de la vanne RGE.

Les substances polluantes émises par un véhicule automobile sont principalement des oxydes et notamment des oxydes d'azote, dénommés sous l'abréviation NOx qui va être utilisée dans ce qui va suivre. Les oxydes d'azote sont formés par la réaction à haute température de l'oxygène avec l'azote lors de la combustion dans le moteur. Les gaz d'échappement, déjà utilisés par le moteur, sont relativement pauvres en oxygène et le fait de les faire recirculer dans l'admission du moteur à combustion interne à la place de l'air frais alimentant le moteur diminue la quantité d'oxygène disponible et donc la formation de NOx.

Le système RGE peut être soit muni d'une boucle ou soit il peut exister deux boucles de circulation de gaz d'échappement dans un système RGE pour un moteur turbo-compressé, la première boucle étant la boucle basse pression et la seconde la boucle haute pression. La ou les boucles d'un système RGE présentent un piquage sur une ligne d'échappement partant d'un collecteur d'échappement en sortie du moteur à combustion interne pour l'évacuation des gaz d'échappement quittant le moteur.

La ligne d'échappement peut comporter une turbine, dans le cas d'un moteur à combustion interne turbocompressé auquel cas le compresseur se trouve dans la ligne d'admission d'air au moteur, ainsi que divers éléments de dépollution sélective des gaz d'échappement, par exemple un filtre à particules, un catalyseur d'oxydation principalement pour les hydrocarbures et un système de réduction catalytique sélective ou système RCS, abréviation qui sera utilisée pour dénommer le système par la suite, ce système étant aussi connu sous l'acronyme anglo-saxon de SCR.

La ou les bouches RGE haute et/ou basse pression rejoignent une conduite d'admission d'air frais en amont d'un collecteur d'admission d'air que comporte le moteur à combustion interne, le cas échéant quand le moteur est un moteur turbocompressé en traversant un compresseur après jonction avec la conduite d'admission d'air frais.

Un système RGE de circulation des gaz d'échappement comporte généralement un échangeur thermique destiné à refroidir les gaz d'échappement brûlés et, pour chaque boucle, au moins une vanne, appelée communément vanne RGE, qui vient régler le débit de gaz recirculés vers un collecteur d'admission à une entrée d'admission d'air au moteur à combustion interne.

Cette vanne est pilotée par le calculateur d'un contrôle commande moteur en charge du bon fonctionnement du moteur à combustion interne. Les particules et hydrocarbures présents dans les gaz d'échappement recirculés par le système RGE pour être réintroduits à l'admission d'air du moteur sont en grande majorité brûlés ou rebrûlés dans la chambre à combustion du moteur lors de la combustion suivante.

Le contrôle commande moteur a la faculté de piloter l'admission d'air en favorisant le remplissage du moteur par une grande quantité d'air frais ou en favorisant un plus grand taux de gaz RGE dans l'air à l'admission. Ces deux types de pilotage sont appelés respectivement priorité air et priorité RGE, dénominations qui vont être utilisées par la suite.

Ainsi, en phases transitoires, d'un point calibré en stabilisé à un autre, la priorité de régulation détermine le comportement de la ligne d'admission d'air pilotée. Fréquemment, le pilotage du moteur est réalisé sur une consigne de couple privilégiant l'air frais, donc une bonne réponse dynamique du moteur et donc une priorité air pour l'admission d'air au moteur. Ce mode de fonctionnement est cependant polluant en créant des NOx lors de la combustion et en ne détruisant pas des NOx recirculés par le système RGE.

Comme mentionné précédemment, pour la dépollution des oxydes d'azote ou NOx, il est fréquemment utilisé un système de réduction catalytique sélective ou système RCS. Dans un système RCS, il est utilisé un agent réducteur liquide destiné à être introduit en quantités prédéfinies et par injections consécutives dans une ligne d'échappement d'un véhicule automobile. L'ajout de cet agent réducteur de dépollution effectue le traitement des NOx présents dans la ligne d'échappement du moteur à combustion interne d'un véhicule automobile.

Cet agent réducteur RCS est fréquemment de l'ammoniac ou un précurseur de l'ammoniac, par exemple de l'urée ou un dérivé de l'urée, notamment un mélange connu sous la marque Adblue®. L'agent réducteur liquide se décompose en ammoniac gazeux, pouvant être aussi mentionné ci-après par sa formule chimique NH3. Le NH3 se stocke dans un catalyseur RCS pour réduire les NOx se trouvant dans les gaz évacués par la ligne d'échappement. Ceci vaut aussi bien pour les véhicules Diesel que pour les véhicules à essence.

Le réservoir d'agent réducteur liquide permet de parcourir un kilométrage prédéterminé qui peut cependant varier selon le mode de conduite du conducteur, ce kilométrage pouvant être par exemple de 2.500 km. Un peu avant que ce kilométrage prédéterminé soit atteint, le conducteur est alerté, par exemple par un voyant allumé présent sur un tableau de bord du véhicule automobile que le réservoir doit être à nouveau rempli.

Si ceci n'est pas effectué et que le réservoir d'agent réducteur se retrouve vide, le véhicule ne peut plus démarrer. La consommation d'agent réducteur est plus forte en fonctionnement de l'admission en priorité d'air qu'en fonctionnement en priorité RGE, étant donné qu'il y a plus de NOx produit lors de la combustion dans le moteur et moins de NOx recirculés détruits lors de cette combustion. Le document US2013152549 divulgue un procédé de détermination de la quantité d'oxydes d'azote sortant du moteur qui est influencée par le système RGE afin de déterminer le consommation de d'urée.

Jusqu'ici l'écart de consommation d'agent réducteur provoqué par un pilotage de l'admission d'air en priorité air par rapport à un pilotage en priorité RGE n'a pas été quantifié. Ceci est désavantageux dans le sens où le conducteur n'a pas d'information au sujet de l'influence du mode de pilotage de l'admission sur la consommation en agent réducteur et n'est donc pas informé sur les économies de consommation d'agent réducteur réalisées ou pouvant être réalisées.

Par conséquent, le problème à la base de l'invention est pour un moteur à combustion interne associé, d'une part, à sa sortie à une ligne d'échappement comprenant au moins un système de réduction catalytique sélective avec injection d'agent réducteur dans la ligne et, d'autre part, à un système de recirculation des gaz d'échappement vers son admission d'air, ce système étant piloté pour une introduction plus ou moins importante de gaz recirculés dans l'air frais à l'admission du moteur, de calculer l'écart de consommation d'agent réducteur entre un pilotage privilégiant l'apport d'air frais et un pilotage privilégiant une augmentation du taux des gaz recirculés dans l'air acheminé à l'admission du moteur.

Pour atteindre cet objectif, il est prévu selon l'invention un procédé de suivi de la consommation en agent réducteur délivré par un système de réduction catalytique sélective présent dans une ligne d'échappement en sortie d'un moteur à combustion interne pour la réduction des oxydes d'azote contenus dans des gaz d'échappement évacués par la ligne, le moteur à combustion interne étant associé avec un système de recirculation des gaz d'échappement vers une ligne d'admission d'air frais à une entrée du moteur, les gaz d'échappement recirculés étant mélangés avec de l'air frais en proportion variable par régulation établie selon une priorité donnée au remplissage en air à l'admission du moteur, dite priorité air, ou au remplissage avec un plus fort taux en gaz recirculés, dite priorité RGE, caractérisé par les étapes suivantes :

- calcul d'une quantité d'oxygène admis en entrée du moteur respectivement en priorité air et RGE avant une combustion dans le moteur,
- calcul d'une quantité d'oxydes d'azote sortant du moteur par la ligne d'échappement en priorité air et RGE après la combustion,
- calcul d'une quantité d'agent réducteur consommée nécessaire pour la neutralisation de la quantité d'oxydes d'azote contenus dans les gaz sortant par la ligne d'échappement après la combustion en fonction de la quantité calculée d'oxydes d'azote respectivement en priorité air et RGE,
- calcul d'un écart de consommation entre les quantités d'agent réducteur injectées en priorité air et priorité RGE, puis addition des écarts de consommation cumulés pour des combustions successives pendant une durée prédéterminée pour établir un écart de consommation total d'agent réducteur.

L'effet technique est d'obtenir une meilleure comparaison entre les consommations d'agent réducteur en priorité air et en priorité RGE. Le procédé prévoit de calculer un écart d'injection d'agent réducteur du système RCS faisant appel aux deux types de pilotage de contrôle moteur disponibles, c'est-à-dire les priorités air ou RGE. Ainsi, un gain lié à l'utilisation de la fonction de limitation des NOx à la source qui est obtenue par une priorité RGE peut être estimé, par exemple dans le contrôle commande du moteur. Ce gain peut être disponible pour d'autres fonctions gérées par le contrôle commande.

Avantageusement, pour chaque priorité air ou RGE, la quantité d'oxygène est calculée en fonction d'un débit d'oxygène en entrée du moteur respectivement en priorité air ou RGE, ce débit d'oxygène étant la somme d'un débit d'air en entrée du moteur ramené en oxygène et d'un débit de gaz recirculés que multiplie une variable de correction respective pour une priorité air ou RGE s'exprimant selon la formule suivante :

$$O2\ EM\ PA = (\%O2\ PA - 14{,}5.\ 0{,}2135.\ Debinj\ C)/\ (Deb\ G\ tot\ PA + Debinj\ C)$$

pour une priorité air ou

$$O2 \ EM \ PRGE = (\%O2 \ PRGE - 14,5. \ 0,2135. \ Debinj \ C)/ \ (Deb \ G \ tot \ PRGE + Debinj \ C)$$

pour une priorité RGE

avec %O2 PA ou %O2 PRGE étant le taux d'oxygène respectivement en priorité air ou RGE, Debinj C étant le débit de carburant injecté et Deb G tot PA ou Deb G tot PRGE étant le débit de gaz total respectivement en priorité air ou RGE, la variable de conversion étant calculée en aval sur la quantité d'oxygène précédemment calculée.

Avantageusement, pour chaque priorité air ou RGE, le calcul de la quantité d'oxydes d'azote en sortie du moteur NOx S PA ou NOx S PRGE s'effectue en fonction de la quantité d'oxygène calculée selon la formule :

$$NOx \ S \ PA/NOx_{stab} = 10^{A.(\%O2 \ PA \ -O2stab)}$$

pour une priorité air ou

$$NOx \ S \ PRGE/NOx_{stab} = 10^{A.(\%O2 \ PRGE \ -O2stab)}$$

pour une priorité RGE

les valeurs O2stab et NOxstab étant les valeurs stabilisées d'oxygène et d'oxydes d'azote établies lors de la mise au point du moteur et A étant un coefficient spécifique au moteur.

Avantageusement, les valeurs stabilisées d'oxygène et d'oxydes d'azote sont établies en fonction d'un régime moteur et d'une consigne de couple moteur.

Avantageusement, le calcul d'une quantité d'agent réducteur consommée se fait à partir de la quantité calculée d'oxydes d'azote sortant du moteur et selon la ou les réactions chimiques de neutralisation des oxydes d'azote dans la ligne d'échappement.

Avantageusement, quand l'agent réducteur est à base d'ammoniac, il est tenu compte des réactions suivantes de l'ammoniac $NH_3$ qui réagit avec les oxydes d'azote sous forme de monoxyde d'azote NO et de dioxyde d'azote $NO_2$ selon les réactions:

$$4 \ NO + 4 \ NH_3 + O_2 \rightarrow 4 \ N_2 + 6 \ H_2O$$

$$2 \ NO + 4 \ NH_3 + 2NO_2 \rightarrow 4 \ N_2 + 6 \ H_2O$$

le rapport entre monoxyde d'azote et dioxydes d'azote dans les gaz d'échappement étant estimé selon la combustion du moteur,

et quand l'agent réducteur est à base d'urée $CO(NH_2)_2$, il est tenu compte de la décomposition de l'urée, en présence d'eau et à température élevée, en ammoniac $NH_3$ et en dioxyde de carbone $CO_2$ selon la réaction chimique :

$$CO(NH_2)_2 + H_2O \rightarrow 2 \ NH_3 + CO_2$$

L'invention concerne aussi un calculateur, caractérisé en ce qu'il comprend les moyens de mise en oeuvre d'un tel procédé de calcul, avec des moyens de calcul et de mémorisation des quantités d'oxygène en entrée du moteur, des quantités d'oxyde d'azote en sortie du moteur en fonction des quantités d'oxygène mémorisées, des quantités d'agent réducteur nécessaires pour la neutralisation des quantités d'oxydes d'azote en sortie du moteur, le calculateur comprenant de plus des moyens de détection d'un fonctionnement du moteur en priorité air ou RGE, des moyens de calcul et de mémorisation des écarts de consommation d'agent réducteur entre des priorités air et RGE en fonction des quantités d'agent réducteur nécessaires pour la neutralisation des quantités d'oxydes d'azote en sortie du moteur calculées et des moyens de sommation des écarts de consommation successifs pour l'obtention de l'écart de consommation total d'agent réducteur.

L'invention concerne aussi un ensemble moteur comprenant un moteur à combustion avec une ligne d'admission d'air, une ligne d'échappement intégrant un système de réduction catalytique sélective, au moins un système de recirculation des gaz d'échappement vers la ligne d'admission d'air frais à une entrée du moteur à partir d'un piquage sur la ligne d'échappement et un contrôle commande du moteur comprenant un bloc de gestion avec des moyens de calcul de consignes de débit d'air et de taux de gaz recirculés en entrée du moteur et des moyens de pilotage en priorité air ou RGE de l'ensemble moteur, caractérisé en ce que le contrôle commande intègre un tel calculateur.

L'invention concerne aussi un véhicule automobile, caractérisé en ce qu'il comprend un tel ensemble moteur et une interface homme machine visible par et à la portée d'un conducteur du véhicule, cette interface étant connectée au contrôle commande de l'ensemble moteur, l'interface comprenant des moyens de réception de l'écart de consommation total d'agent réducteur lui étant transmis par le contrôle commande, un dispositif d'affichage de l'écart de consommation total d'agent réducteur et au moins un bouton de commande relié à des moyens de communication à destination du bloc de gestion du contrôle commande permettant au conducteur de choisir entre un mode de fonctionnement du moteur pour lequel la priorité d'air est favorisée et un mode économique de consommation d'agent réducteur pour lequel la priorité RGE est favorisée.

Avantageusement, le dispositif d'affichage de l'interface homme machine indique aussi le mode de priorité air ou RGE en vigueur pour l'ensemble moteur.

D'autres caractéristiques, buts et avantages de la présente invention apparaîtront à la lecture de la description détaillée qui va suivre et au regard des dessins annexés donnés à titre d'exemples non limitatifs et sur lesquels :

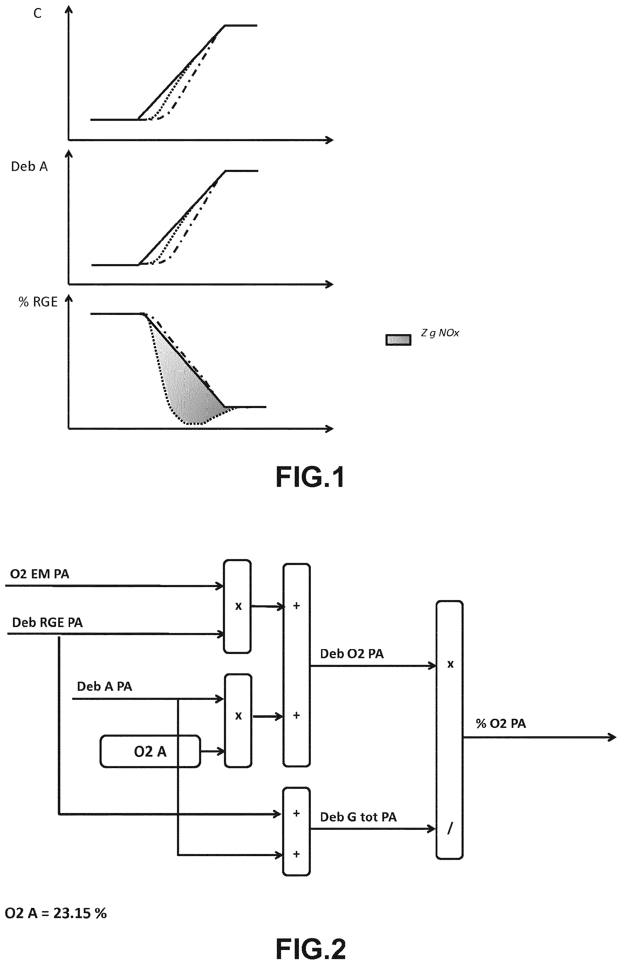

- la figure 1 représente trois diagrammes concernant chacune une des valeurs qui sont respectivement un couple moteur, un débit d'air et un taux de gaz recirculés avec pour chaque diagramme trois courbes dont une pour une variation de la consigne de la valeur concernée, une deuxième pour une variation de la valeur lors d'un pilotage à priorité air et une troisième pour une variation de la valeur en pilotage à priorité RGE, avec l'illustration d'un gain de conversion d'oxydes d'azote obtenu lors d'un pilotage à priorité RGE par rapport à une priorité air, ce gain de conversion pouvant être calculé lors d'une étape du procédé selon la présente invention,
- la figure 2 est un diagramme montrant l'évaluation du taux d'oxygène selon un pilotage en priorité air, cette évaluation servant lors d'une étape du procédé selon la présente invention,
- la figure 3 est un diagramme montrant l'évaluation du taux d'oxygène selon un pilotage en priorité RGE, cette évaluation servant lors d'une étape du procédé selon la présente invention,
- la figure 4 est un diagramme montrant l'évaluation de la production d'oxydes d'azote en sortie du moteur selon un pilotage en priorité air, cette évaluation servant lors d'une étape du procédé selon la présente invention,
- la figure 5 est un diagramme montrant l'évaluation de la production d'oxydes d'azote en sortie du moteur selon un pilotage RGE, cette évaluation servant lors d'une étape du procédé selon la présente invention,
- la figure 6 est un diagramme montrant le calcul du gain en consommation d'agent réducteur d'un système RCS selon un pilotage en priorité RGE par rapport à un pilotage en priorité air, ce calcul étant effectué conformément au procédé selon la présente invention.

La présente invention concerne un procédé de suivi de la consommation en agent réducteur délivré par un système de réduction catalytique sélective ou système RCS présent dans une ligne d'échappement en sortie d'un moteur à combustion interne pour la réduction des oxydes d'azote ou NOx contenus dans des gaz d'échappement évacués par la ligne.

De plus, dans le cadre de l'invention, le moteur à combustion interne est associé avec un système de recirculation des gaz d'échappement ou système RGE vers une ligne d'admission d'air frais à une entrée du moteur. Les gaz d'échappement recirculés par ce système ou gaz RGE sont mélangés avec de l'air frais en proportion variable, une régulation du mélange air et gaz recirculés étant établie selon une priorité donnée au remplissage en air dite priorité air à l'admission du moteur ou au remplissage avec une plus forte teneur en gaz recirculés dite priorité RGE.

La fonction de priorité air ou RGE est intégrée dans un contrôle commande de l'ensemble moteur comprenant le moteur à combustion interne et ses accessoires. Ce contrôle commande contient dans un bloc de gestion des consignes de débit d'air et de taux de gaz RGE. Ceci est notamment illustré à la figure 1.

La figure 1 représente trois diagrammes respectivement d'un couple moteur C, d'un débit d'air Da et d'un taux de gaz recirculés %RGE ou taux RGE avec pour chaque diagramme trois courbes dont une première en trait plein pour montrer une consigne de la valeur concernée, une deuxième en trait pointillés pour la valeur en pilotage à priorité air et une troisième en traits pointillés petits et grands alternés pour la valeur en pilotage à priorité RGE.

Pour les courbes du taux de gaz recirculés %RGE, la zone foncée entre la courbe de taux RGE en priorité air et la courbe de taux RGE en priorité RGE définit la zone de gain Z g NOx d'oxydes d'azote obtenu par un pilotage à priorité RGE avec la conservation d'un niveau de gaz recirculés élevé par rapport à un pilotage à priorité air.

Les consignes de débit d'air Deb A et de débit de gaz RGE % RGE sont calculées en permanence dans un calculateur du contrôle commande du moteur. Un booléen d'activation d'une stratégie en priorité air ou RGE permet de maximiser ou minimiser l'une ou l'autre de ces consignes, afin d'assurer la priorité d'un débit d'air ou la priorité d'un taux plus élevé de gaz RGE, soit respectivement la priorité air et la priorité RGE.

La présente invention se propose de calculer un écart de consommation entre les quantités d'agent réducteur SCR injectées respectivement en priorité RGE et en priorité air, ces écarts de consommation étant additionnés pour obtenir un écart cumulé pour des combustions successives pendant une durée prédéterminée. Ceci est fait en plusieurs étapes.

La première étape concerne le calcul d'une quantité d'oxygène admis dans le moteur respectivement en priorité air et RGE avant une combustion dans le moteur. Il est en effet nécessaire de connaître cette quantité d'oxygène, différente en priorité air et RGE du fait des proportions différentes du mélange de l'air frais avec des gaz RGE, avec un taux de gaz RGE recirculés plus fort pour une priorité RGE par rapport à une priorité air. En priorité air, seul de l'air frais peut alimenter le moteur.

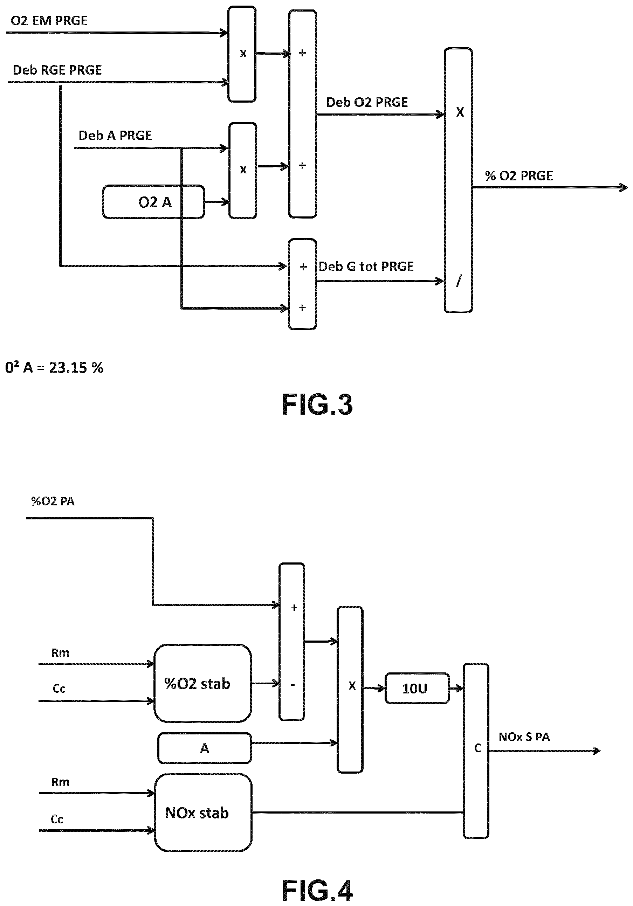

Les figures 2 et 3 montrent un diagramme de l'évaluation du taux d'oxygène %O2 PA ou %O2 PRGE selon un pilotage en priorité air et en priorité RGE. Pour chacune de ces priorités identifiées par PA pour la priorité en air et PRGE pour la priorité RGE, il est tenu compte du pourcentage d'oxygène dans l'air O2 A soit 23,15% en masse, d'un débit RGE, respectivement Deb RGE PA et Deb RGE PRGE, d'un débit d'air, respectivement Deb A PA et Deb A PRGE.

A partir de ces paramètres, il est calculé un débit d'oxygène, respectivement Deb O2 PA et Deb O2 PRGE. Le débit d'oxygène en priorité air Deb O2 PA est calculé, d'abord en fonction du débit RGE en priorité air Deb RGE PA que multiplie une variable de correction en priorité air O2 EM PA. A ce résultat est ajouté le débit en air en priorité air Deb A PA que multiplie le pourcentage d'oxygène dans l'air O2 A soit 23,15% en masse.

Il en va de même pour le débit d'oxygène en priorité RGE Deb O2 PRGE qui est calculé en fonction du débit RGE en priorité RGE Deb RGE PRGE que multiplie une variable de correction en priorité RGE O2 EM PRGE additionné du débit d'air en priorité RGE Deb A PRGE que multiplie le pourcentage d'oxygène dans l'air O2 A pour convertir et ramener un débit d'air à un débit d'oxygène.

Pour une priorité air, une équation est donnée pour le calcul de la variable en priorité air O2 EM PA :

O2 EM PA = (%O2 PA - 14,5. 0,2135. Debinj C)/ (Deb G tot PA + Debinj C) Avec %O2 PA le taux d'oxygène en priorité air, Debinj C le débit de carburant injecté et Deb G tot PA le débit de gaz total en priorité air, la variable de conversion O2 EM PA étant calculée en aval sur la quantité d'oxygène %O2 PA précédemment calculée.

Il en va de même pour la variable en priorité RGE O2 EM PRGE avec l'équation : O2 EM PRGE = (%O2 PRGE - 14,5. 0,2135. Debinj C)/ (Deb G tot PRGE + Debinj C) Avec %O2 PRGE le taux d'oxygène en priorité RGE, Debinj C le débit de carburant injecté et Deb G tot PRGE le débit de gaz total en priorité RGE, sensiblement équivalent au débit de gaz total en priorité air Deb G tot PA, la variable de conversion O2 EM PRGE étant calculée en aval sur la quantité d'oxygène %O2 PRGE précédemment calculée.

Les débits de gaz total pour une priorité air ou RGE, respectivement Deb G tot PA ou Deb G tot PRGE, sont obtenus en additionnant les débits d'air et les débits RGE aussi bien en priorité air qu'en priorité RGE, soit respectivement Deb A PA + Deb RGE PA et Deb A PRGE + Deb RGE PRGE.

Enfin, il est calculé un taux d'oxygène pour chacune de ces priorités soit %O2 PA ou %O2 PRGE. Il peut ainsi être calculé une quantité d'oxygène rentrant dans le moteur, cette quantité d'oxygène étant calculée en fonction du débit d'oxygène.

Dans le cas d'une priorité air, le débit d'air Deb A PA est la consigne brut de débit d'air et le débit RGE des gaz recirculés Deb RGE PA est l'estimation ou la consigne RGE réalisable basée sur la consigne de débit d'air en lui étant complémentaire. Dans le cas d'une priorité RGE, le débit d'air Deb A PRGE est l'estimation ou la consigne réalisable basée sur la consigne de taux RGE et le débit RGE des gaz recirculés Deb RGE PRGE est la consigne brute de taux RGE retraduite en débit RGE via une estimation de rendement volumétrique.

La deuxième étape concerne le calcul d'une quantité d'oxydes d'azote sortant du moteur par la ligne d'échappement en priorité air et en priorité RGE après une combustion dans le moteur.

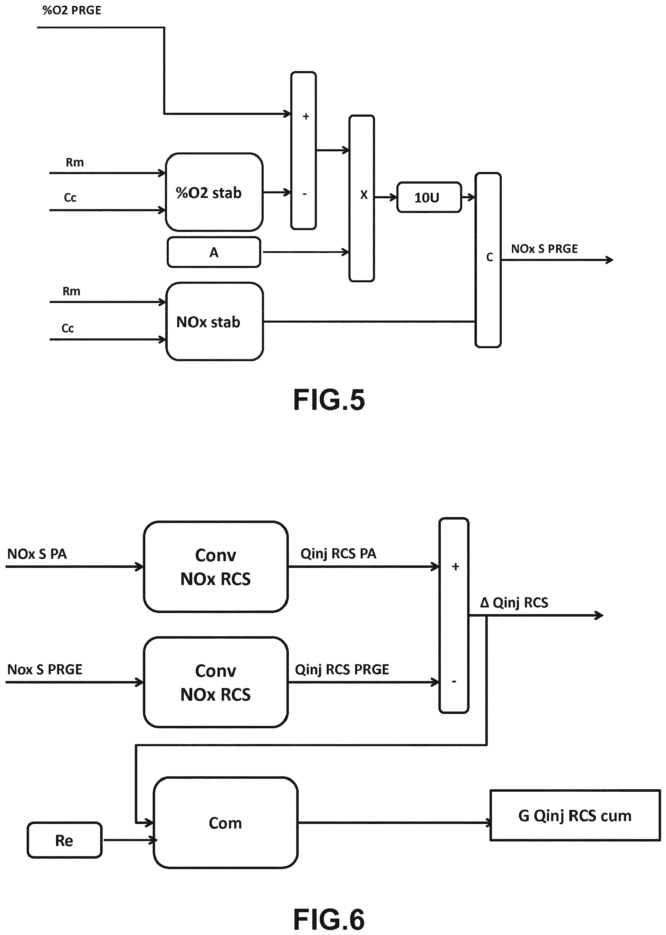

Ceci est montré aux figures 4 et 5 respectivement pour une priorité air et une priorité RGE. Pour ce calcul le taux d'oxygène calculé à la première étape du procédé, respectivement %O2 PA et %O2 PRGE, est utilisé. Le régime moteur Rm et la consigne de couple Cc peuvent être introduits dans une cartographie donnant un taux d'oxygène en conditions stabilisées du moteur désigné par % O2 stab, ce taux d'oxygène en conditions stabilisées % O2 stab étant soustrait au taux d'oxygène respectif pour chacune des priorités soit %O2 PA et %O2 PRGE. Après obtention du taux d'oxygène ainsi soustrait, ce taux est multiplié par un coefficient A représentatif du moteur.

Lors de la combustion dans le moteur, une partie de la quantité d'oxygène réagit avec l'azote contenu dans l'air pour donner des oxydes d'azote ou NOx. Aux figures 4 et 5, le calcul de la quantité d'oxydes d'azote NOx S PA, NOx S PRGE en sortie du moteur s'effectue en fonction de la quantité d'oxygène %O2 PA, %O2 PRGE précédemment calculée selon la formule :

$$NOx \, S \, PA / NOx_{stab} = 10^{A.\%O2 \, PA \, -O2stab}$$

pour une priorité air ou

$$\text{NOx S PRGE/NOx}_{stab} = 10^{A.\%O2\ PRGE\ -O2stab}$$

pour une priorité RGE

les valeurs O2stab et NOxstab étant les valeurs stabilisées d'oxygène et d'oxydes d'azote établies lors de la mise au point du moteur et A étant un coefficient spécifique au moteur.

Aux figures 4 et 5, la référence 10U illustre la conversion de taux d'oxygène %O2 en une puissance 10 sous la forme $10^{A.\%O2\ PA\ -O2stab}$ ou $10^{A.\%O2\ PRGE\ -O2stab}$. La conversion du taux d'oxygène en quantité de NOx sortant du moteur est faite en C, ce qui donne une quantité de NOx sortant du moteur NOx S PA pour une priorité air et une quantité de NOx sortant du moteur NOx S PREG pour une priorité RGE.

Les valeurs O2stab et NOxstab sont les valeurs stabilisées d'oxygène et d'oxydes d'azote établies lors de la mise au point du moteur et peuvent être calculées selon le régime moteur Rm et la consigne de couple Cc en étant introduits dans une cartographie donnant respectivement un taux d'oxygène en conditions stabilisées du moteur % O2 stab et un taux d'oxydes d'azote en conditions stabilisées du moteur désigné par % NOx stab.

Ainsi, deux cartographies de taux d'oxygène stabilisé %O2 stab et de NOx moteur stabilisé NOx stab peuvent être calculées ou mesurées lors de la mise au point du moteur. Ces cartographies sont les mêmes pour le calcul des NOX source en priorité air ou RGE.

La troisième étape est le calcul d'une quantité d'agent réducteur consommée nécessaire pour la neutralisation de la quantité d'oxydes d'azote contenus dans les gaz sortant par la ligne d'échappement après une combustion en fonction de la quantité calculée d'oxydes d'azote NOx S PA et NOx S RGE respectivement en priorité air et RGE.

La quatrième étape est le calcul d'un écart de consommation entre les quantités d'agent réducteur injectées en priorité air et priorité RGE, puis l'addition des écarts de consommation cumulés pour des combustions successives pendant une durée prédéterminée. Les troisième et quatrième étapes sont regroupées à la figure 6.

La figure 6 est un diagramme montrant le calcul de l'écart de consommation total d'agent réducteur, autrement dit ici du gain en consommation d'agent réducteur d'un système RCS selon un pilotage en priorité RGE par rapport à un pilotage en priorité air.

Les quantités d'oxydes d'azote source en sortie du moteur, respectivement NOx S PA pour la priorité air et NOx S PRGE pour la priorité RGE sont respectivement introduites dans un matrice de conversion Conv NOx RCS de la quantité de NOx en quantité d'agent réducteur RCS nécessaire pour sa neutralisation.

Dans chacune de ces matrices de conversion Conv NOx RCS, le calcul de la quantité d'agent réducteur RCS consommée se fait à partir de la quantité calculée d'oxydes d'azote sortant du moteur NOx S PA ou NOX S PRGE selon la ou les réactions chimiques de neutralisation des oxydes d'azote.

Par exemple, l'agent réducteur peut être à base d'ammoniac. Dans ce cas, il peut être tenu compte des réactions suivantes de l'ammoniac $NH_3$ qui réagit avec les oxydes d'azote sous forme de monoxyde d'azote NO et de dioxyde d'azote $NO_2$ selon les réactions:

$$4\ NO + 4\ NH_3 + O_2 \rightarrow 4\ N_2 + 6\ H_2O$$

$$2\ NO + 4\ NH_3 + 2NO_2 \rightarrow 4\ N_2 + 6\ H_2O$$

le rapport entre monoxyde d'azote et dioxydes d'azote dans les gaz d'échappement étant estimé selon la combustion du moteur ou par un capteur présent dans la ligne d'échappement pouvant différencier le monoxyde du dioxyde.

Pour le cas le plus fréquent, quand l'agent réducteur est à base d'urée de formule chimique $CO(NH_2)_2$, il est tenu compte de la décomposition de l'urée, en présence d'eau et à température élevée, en ammoniac $NH_3$ et en dioxyde de carbone CO2 selon la réaction chimique :

$$CO(NH_2)_2 + H_2O \rightarrow 2\ NH_3 + CO_2$$

Ensuite, il est tenu compte des réactions précédemment mentionnées pour la réaction de l'ammoniac avec les oxydes d'azote.

Après conversion, il est obtenu respectivement une quantité consommée d'agent RCS respectivement pour les deux priorités soit Qinj RCS PA et Qinj RCS PRGE, cette quantité ayant été injectée dans la ligne d'échappement pour la réduction des NOx. Il est procédé à la différence entre les deux quantités d'agent RCS, soit Qinj RCS PA moins Qinj RCS PRGE pour obtenir un écart de consommation entre les quantités d'agent réducteur injectées en priorité air Qinj RCS PA et en priorité RGE Qinj RCS PRGE, cet écart étant référencé Δ Qinj RCS à la figure 6.

Les écarts successifs Δ Qinj RCS sont additionnés dans un compteur Com afin de donner un gain cumulé de quantité RCS injectée G Qinj RCS cum. Ce compteur Com peut être réinitialisé par la fonction Re.

La variable ainsi calculée est un gain de débit injecté d'agent réducteur cumulé. Le calcul d'un tel gain de débit injecté d'agent réducteur cumulé peut permettre de disposer dans un calculateur du contrôle commande du moteur d'une variable pouvant servir à une interface homme machine pour son exploitation et sa valorisation auprès du conducteur, comme il sera détaillé ultérieurement.

La présente invention concerne aussi un calculateur pour la mise en oeuvre du procédé précédemment décrit. Le calculateur comprend des moyens de détection d'un fonctionnement du moteur en priorité air ou RGE afin d'activer le procédé pendant ces priorités.

Le calculateur comprend des moyens de calcul et de mémorisation des quantités d'oxygène en entrée du moteur selon les figures 2 et 3. Le calculateur comprend des moyens de calcul et de mémorisation des quantités d'oxyde d'azote en sortie du moteur en fonction et par conversion en puissance 10 des quantités d'oxygène mémorisées, ceci étant montré aux figures 4 et 5.

Le calculateur comprend des moyens de calcul et de mémorisation des quantités d'agent réducteur nécessaires pour la neutralisation des quantités d'oxydes d'azote en sortie du moteur, comme il a été montré à la figure 6, des moyens de calcul et de mémorisation des écarts de consommation d'agent réducteur $\Delta$ Qinj RCS entre des priorités air et RGE et des moyens de sommation des écarts successifs pour l'obtention d'un gain cumulé d'agent réducteur consommé G Qinj RCS cum.

Le calculateur peut faire partie d'un contrôle commande en charge du pilotage de données de fonctionnement d'un ensemble moteur avec un moteur thermique. Cet ensemble moteur comprend un moteur à combustion avec une ligne d'admission d'air, une ligne d'échappement intégrant un système de réduction catalytique sélective, au moins un système de recirculation des gaz d'échappement vers la ligne d'admission d'air frais à une entrée du moteur à partir d'un piquage sur la ligne d'échappement.

Le contrôle commande de cet ensemble moteur comprend un bloc de gestion avec des moyens de calcul de consignes de débit d'air et de taux de gaz recirculés en entrée du moteur et des moyens de pilotage en priorité air ou RGE de l'ensemble moteur. Ce contrôle commande intègre avantageusement un calculateur tel que précédemment décrit pour la mise en oeuvre du procédé selon la présente invention.

Le principal avantage de la présente invention est de pouvoir présenter à un conducteur d'un véhicule les économies réalisées sur sa consommation d'agent réducteur, en sélectionnant un mode de conduite se basant sur un mode d'admission d'air à priorité RGE, ce mode pouvant être appelé mode de dépollution ou mode éco-agent réducteur.

Pour ce faire, le véhicule automobile comprend pour un ensemble moteur tel que précédemment décrit une interface homme machine visible par et à la portée d'un conducteur du véhicule. Cette interface est visible pour afficher des informations au conducteur et à portée du conducteur pour que celui-ci active une fonction par l'intermédiaire de l'interface.

En se référant aux figures et notamment à la figure 6, l'interface est connectée au contrôle commande de l'ensemble moteur et comprend des moyens de réception du gain d'agent réducteur cumulé G Qinj RCS cum lui étant transmis par le contrôle commande.

L'interface comprend aussi un dispositif d'affichage à destination du conducteur du gain cumulé G Qinj RCS cum et au moins un bouton de commande relié à des moyens de communication vers le bloc de gestion du contrôle commande. Le bouton de commande peut être physique ou numérique.

Un tel bouton de commande permet au conducteur de choisir entre un mode de fonctionnement du moteur pour lequel la priorité d'air est favorisée et un mode économique de consommation d'agent réducteur pour lequel la priorité RGE est favorisée. Dans ce dernier cas, des économies de consommation d'agent réducteur sont réalisées en regard de la consommation en priorité air.

Du fait du dispositif d'affichage qui informe le conducteur du gain cumulé G Qinj RCS cum calculé par le contrôle commande, le conducteur suit presque en temps réel cette économie en étant directement concerné par cette économie puisqu'il fait lui-même le plein d'agent réducteur en station de carburant.

Lorsque le conducteur du véhicule fait le choix d'un mode dépollution ou éco-agent réducteur par le bouton de commande disponible sur l'interface homme machine dans le véhicule, avantageusement sur le tableau de bord du véhicule, l'interface expose sur son dispositif d'affichage le gain réalisé sur le volume injecté d'agent réducteur. Ceci est assimilable à la fonction déjà disponible pour le gain lié à un système d'arrêt et de démarrage automatiques du véhicule affichant une durée de moteur à l'arrêt ou un gain de consommation par kilomètre.

Le gain de réducteur peut être présenté en millilitres et est cumulatif à partir du moment où le conducteur active la fonction en mode dépollution. Afin d'indiquer que cette valeur est liée à l'économie d'agent réducteur, il peut être possible d'afficher de façon connexe à ce gain un signe distinctif symbolisant l'agent réducteur. Le dispositif d'affichage de l'interface homme machine peut indiquer aussi le mode de priorité air ou RGE en vigueur à un instant donné pour l'ensemble moteur.

Une telle interface permet de valoriser auprès du conducteur la fonction de pilotage du moteur avec un taux plus important de gaz recirculés et de le sensibiliser à un tel mode de priorité.

L'invention n'est nullement limitée aux modes de réalisation décrits et illustrés qui n'ont été donnés qu'à titre d'exemples.

**Revendications**

**1.** Procédé de suivi de la consommation en agent réducteur délivré par un système de réduction catalytique sélective présent dans une ligne d'échappement en sortie d'un moteur à combustion interne pour la réduction des oxydes d'azote contenus dans des gaz d'échappement évacués par la ligne, le moteur à combustion interne étant associé avec un système de recirculation des gaz d'échappement vers une ligne d'admission d'air frais à une entrée du moteur, les gaz d'échappement recirculés étant mélangés avec de l'air frais en proportion variable par régulation établie selon une priorité donnée au remplissage en air à l'admission du moteur, dite priorité air, ou au remplissage avec un plus fort taux en gaz recirculés, dite priorité RGE, **caractérisé par** les étapes suivantes :

- calcul d'une quantité d'oxygène admis en entrée du moteur respectivement en priorité air (%O2 PA) et RGE (%O2 PRGE) avant une combustion dans le moteur,
- calcul d'une quantité d'oxydes d'azote sortant du moteur par la ligne d'échappement en priorité air (NOx S PA) et RGE (NOx S PRGE) après la combustion,
- calcul d'une quantité d'agent réducteur consommée nécessaire pour la neutralisation de la quantité d'oxydes d'azote contenus dans les gaz sortant (NOx S PA, NOx S PRGE) par la ligne d'échappement après la combustion en fonction de la quantité calculée d'oxydes d'azote respectivement en priorité air (NOx S PA) et RGE (NOx S PRGE),
- calcul d'un écart de consommation (Δ Qinj RCS) entre les quantités d'agent réducteur injectées en priorité air et priorité RGE, puis addition des écarts de consommation cumulés pour des combustions successives pendant une durée prédéterminée pour établir un écart de consommation total d'agent réducteur (G Qinj RCS cum).

**2.** Procédé selon la revendication 1, dans lequel, pour chaque priorité air ou RGE, la quantité d'oxygène (%O2 PA, %O2 PRGE) est calculée en fonction d'un débit d'oxygène en entrée du moteur respectivement en priorité air ou RGE, ce débit d'oxygène étant la somme d'un débit d'air (Deb A PA, Deb A PRGE) en entrée du moteur ramené en oxygène (O2 A) et d'un débit de gaz recirculés (Deb RGE PA, Deb RGE PRGE) que multiplie une variable de correction (O2 EM PA, O2 EM PRGE) respective pour une priorité air ou RGE s'exprimant selon la formule suivante :

$$\text{O2 EM PA} = (\%\text{O2 PA} - 14{,}5.\ 0{,}2135.\ \text{Debinj C})/\ (\text{Deb G tot PA} + \text{Debinj C})$$

pour une priorité air ou

$$\text{O2 EM PRGE} = (\%\text{O2 PRGE} - 14{,}5.\ 0{,}2135.\ \text{Debinj C})/\ (\text{Deb G tot PRGE} + \text{Debinj C})$$

pour une priorité RGE
avec %O2 PA ou %O2 PRGE étant le taux d'oxygène respectivement en priorité air ou RGE, Debinj C étant le débit de carburant injecté et Deb G tot PA ou Deb G tot PRGE étant le débit de gaz total respectivement en priorité air ou RGE, la variable de conversion (O2 EM PA, O2 EM PRGE) étant calculée en aval sur la quantité d'oxygène (%O2 PA ou %O2 PRGE) précédemment calculée.

**3.** Procédé selon la revendication 2, dans lequel, pour chaque priorité air ou RGE, le calcul de la quantité d'oxydes d'azote (NOx S PA, NOx S PRGE) en sortie du moteur s'effectue en fonction de la quantité d'oxygène (%O2 PA, %O2 PRGE) calculée selon la formule :

$$\text{NOx S PA}/\text{NOx}_{stab} = 10^{A.(\%\text{O2 PA} - \text{O2stab})}$$

pour une priorité air ou

$$\text{NOx S PRGE}/\text{NOx}_{stab} = 10^{A.(\%\text{O2 PRGE} - \text{O2stab})}$$

pour une priorité RGE

les valeurs O2stab et NOxstab étant les valeurs stabilisées d'oxygène et d'oxydes d'azote établies lors de la mise au point du moteur et A étant un coefficient spécifique au moteur.

4. Procédé selon la revendication 3, dans lequel les valeurs stabilisées d'oxygène et d'oxydes d'azote (O2stab, NOxstab) sont établies en fonction d'un régime moteur (Rm) et d'une consigne de couple moteur (Cc).

5. Procédé selon l'une quelconque des revendications précédentes, dans lequel le calcul d'une quantité d'agent réducteur consommée se fait à partir de la quantité calculée d'oxydes d'azote sortant (NOx S PA ou NOx S PRGE) du moteur et selon la ou les réactions chimiques de neutralisation des oxydes d'azote dans la ligne d'échappement.

6. Procédé selon la revendication 5, dans lequel, quand l'agent réducteur est à base d'ammoniac, il est tenu compte des réactions suivantes de l'ammoniac $NH_3$ qui réagit avec les oxydes d'azote sous forme de monoxyde d'azote NO et de dioxyde d'azote $NO_2$ selon les réactions:

$$4\ NO + 4\ NH_3 + O_2 \rightarrow 4\ N_2 + 6\ H_2O$$

$$2\ NO + 4\ NH_3 + 2NO_2 \rightarrow 4\ N_2 + 6\ H_2O$$

le rapport entre monoxyde d'azote et dioxydes d'azote dans les gaz d'échappement étant estimé selon la combustion du moteur,

et quand l'agent réducteur est à base d'urée $CO(NH_2)_2$, il est tenu compte de la décomposition de l'urée, en présence d'eau et à température élevée, en ammoniac $NH_3$ et en dioxyde de carbone $CO_2$ selon la réaction chimique :

$$CO(NH_2)_2 + H_2O \rightarrow 2\ NH_3 + CO_2$$

7. Calculateur, **caractérisé en ce qu'**il comprend les moyens de mise en oeuvre d'un procédé de calcul selon l'une quelconque des revendications précédentes, avec des moyens de calcul et de mémorisation des quantités d'oxygène en entrée du moteur, des quantités d'oxyde d'azote en sortie du moteur en fonction des quantités d'oxygène mémorisées, des quantités d'agent réducteur nécessaires pour la neutralisation des quantités d'oxydes d'azote en sortie du moteur, le calculateur comprenant des moyens de détection d'un fonctionnement du moteur en priorité air ou RGE, des moyens de calcul et de mémorisation des écarts de consommation d'agent réducteur (Δ Qinj RCS) entre des priorités air et RGE en fonction des quantités d'agent réducteur nécessaires pour la neutralisation des quantités d'oxydes d'azote en sortie du moteur calculées et des moyens de sommation des écarts de consommation (Δ Qinj RCS) successifs pour l'obtention de l'écart de consommation total d'agent réducteur (G Qinj RCS cum).

8. Ensemble moteur comprenant un moteur à combustion avec une ligne d'admission d'air, une ligne d'échappement intégrant un système de réduction catalytique sélective, au moins un système de recirculation des gaz d'échappement vers la ligne d'admission d'air frais à une entrée du moteur à partir d'un piquage sur la ligne d'échappement et un contrôle commande du moteur comprenant un bloc de gestion avec des moyens de calcul de consignes de débit d'air et de taux de gaz recirculés en entrée du moteur et des moyens de pilotage en priorité air ou RGE de l'ensemble moteur, **caractérisé en ce que** le contrôle commande intègre un calculateur selon la revendication 7.

9. Véhicule automobile, **caractérisé en ce qu'**il comprend un ensemble moteur selon la revendication 8 et une interface homme machine visible par et à la portée d'un conducteur du véhicule, cette interface étant connectée au contrôle commande de l'ensemble moteur, l'interface comprenant des moyens de réception de l'écart de consommation total d'agent réducteur (G Qinj RCS cum) lui étant transmis par le contrôle commande, un dispositif d'affichage de l'écart de consommation total d'agent réducteur (G Qinj RCS cum) et au moins un bouton de commande relié à des moyens de communication à destination du bloc de gestion du contrôle commande permettant au conducteur de choisir entre un mode de fonctionnement du moteur pour lequel la priorité d'air est favorisée et un mode économique de consommation d'agent réducteur pour lequel la priorité RGE est favorisée.

10. Véhicule automobile selon la revendication 9, dans lequel le dispositif d'affichage de l'interface homme machine indique aussi le mode de priorité air ou RGE en vigueur pour l'ensemble moteur.

**Patentansprüche**

1. Überwachungsverfahren des Verbrauchs an Reduktionsmittel, das von einem System zur selektiven katalytischen Reduktion, das in einem Abgassystem am Ausgang eines Verbrennungsmotors zum Reduzieren der Stickstoffoxide, die in den Abgasen, die von dem System abgeleitet werden, enthalten sind, vorliegt, wobei der Verbrennungsmotor mit einem Rückführungssystem der Abgase zu einem Frischluft-Ansaugtrang an einem Eingang des Motors assoziiert ist, wobei die rückgeführten Abgase mit Frischluft in variablem Anteil durch Regulierung gemischt werden, die gemäß einem Vorrang eingerichtet ist, der dem Füllen mit Luft an der Ansaugung des Motors gegeben wird, Luftpriorität genannt, oder dem Füllen mit einem stärkeren Gehalt an rückgeführten Gasen, RGE-Priorität genannt, **gekennzeichnet durch** die folgenden Schritte:

   - Berechnung einer Sauerstoffmenge, die am Eingang des Motors jeweils bei Luftpriorität ($\%O_2$ PA) und RGE-Priorität ($\%O_2$ PRGE) vor einer Verbrennung in dem Motor angesaugt wird,
   - Berechnung einer Menge an Stickstoffoxiden, die aus dem Motor durch das Abgassystem bei Luftpriorität (von NOx S PA) und RGE-Priorität (NOx S PRGE) nach der Verbrennung austritt,
   - Berechnung einer verbrauchten Reduktionsmittelmenge, die für die Neutralisierung der Menge an Stickstoffoxiden erforderlich ist, die in den Gasen (NOx S PA, NOx S PRGE), durch das Abgassystem nach der Verbrennung in Abhängigkeit von der berechneten Menge an Stickstoffoxiden jeweils bei Luftpriorität (NOx S PA) und RGE-Priorität (NOx S PRGE) austreten, enthalten sind,
   - Berechnung eines Verbrauchsunterschieds (Δ Qinj RCS) zwischen den bei Luftpriorität und RGE-Priorität eingespritzten Reduktionsmittelmengen, dann Addieren der kumulierten Verbrauchsunterschiede für aufeinanderfolgende Verbrennungen während einer vorbestimmten Dauer, um einen Gesamtverbrauchsunterschied an Reduktionsmittel (G Qinj RCS cum) zu berechnen.

2. Verfahren nach Anspruch 1, wobei für jede Priorität Luft oder RGE die Sauerstoffmenge ($\%O_2$ PA, $\%O_2$ PRGE) in Abhängigkeit von einem Sauerstoffdurchsatz am Eingang des Motors jeweils bei Luftpriorität oder RGE-Priorität berechnet wird, wobei dieser Sauerstoffdurchsatz die Summe eines Luftdurchsatzes (Deb A PA, Deb A PRGE) am Eingang des Motors bezogen auf Sauerstoff ($O_2$ A) und einem Durchsatz an rückgeführten Gasen (Deb RGE PA, Deb RGE PRGE) ist, den eine jeweilige Korrekturvariable ($O_2$ EM PA, $O_2$ EM PRGE) für eine Luftpriorität oder RGE-Priorität korrigiert, die gemäß der folgenden Formel ausgedrückt ist:

$$O_2 \text{ EM PA} = (\%O_2 \text{ PA} - 14,5.0,2135. \text{ Debinj C})/(\text{Deb G tot PA} + \text{Debinj C})$$

für eine Luftpriorität, oder

$$O_2 \text{ EM PRGE} = (\%O_2 \text{ PRGE} - 14,5. 0,2135. \text{ Debinj C})/\text{Deb G tot PRGE} + \text{Debinj C})$$

für eine RGE-Priorität
wobei $\%O_2$ PA oder $\%O_2$ PRGE jeweils der Sauerstoffgehalt bei Luftpriorität oder RGE-Priorität sind, Debinj C der Durchsatz an eingespritztem Kraftstoff ist, und Deb G tot PA oder Deb G tot PRGE der Gesamtgasdurchsatzes jeweils bei Luftpriorität oder RGE-Priorität sind, wobei die Umwandlungsvariable ($O_2$ EM PA, $O_2$ EM PRGE) stromabwärts auf der zuvor berechneten Sauerstoffmenge ($\%O_2$ PA oder $\%O_2$ PRGE) berechnet ist.

3. Verfahren nach Anspruch 2, wobei für jeweils Luftpriorität oder RGE-Priorität die Berechnung der Menge an Stickstoffoxiden (NOx S PA, NOx S PRGE) am Ausgang des Motors in Abhängigkeit von der Sauerstoffmenge ($\%O_2$ PA, $\%O_2$ PRGE) erfolgt, die gemäß folgender Formel berechnet wird:

$$\text{NOx S PA}/\text{NOx}_{stab} = 10^{A.(\%O2 \text{ PA} - O2stab)}$$

für eine Luftpriorität, oder

$$NOx\ S\ PRGE/NOx_{stab} = 10^{A.(\%O2\ PRGE - O2stab)}$$

für eine RGE-Priorität,

wobei die Werte $O_{2stab}$ und $NOx_{stab}$ stabilisierte Sauerstoff- und Stickstoffoxid-Werte sind, die bei der Optimierung des Motors ermittelt werden, und A ein für den Motor spezifischer Koeffizient ist.

4. Verfahren nach Anspruch 3, wobei die stabilisierten Sauerstoff- und Stickstoffoxid-Werte ($O_{2stab}$, $NOx_{stab}$) in Abhängigkeit von einer Motordrehzahl (Rm) und einem Motordrehmomentsollwert (Cc) ermittelt werden.

5. Verfahren nach einem der vorhergehenden Ansprüche, wobei die Berechnung einer verbrauchten Reduktionsmittelmenge ausgehend von der berechneten Menge an austretenden Stickstoffoxiden (NOx S PA oder NOx S PRGE) des Motors und gemäß der oder den chemischen und Neutralisierungsreaktionen der Stickstoffoxide in dem Abgassystem erfolgt.

6. Verfahren nach Anspruch 5, wobei, wenn das Reduktionsmittel auf Ammoniakbasis ist, folgende Reaktionen des Ammoniaks $NH_3$, das mit den Stickstoffoxiden in der Form von Stickstoffmonoxid NO und Stickstoffdioxid $NO_2$ gemäß den folgenden Reaktionen reagiert, berücksichtigt werden:

$$4\ NO + 4\ NH_3 + O_2 \rightarrow 4\ N_2 + 6\ H_2O$$

$$2\ NO + 4\ NH_3 + 2NO_2 \rightarrow 4\ N_2 + 6\ H_2O$$

wobei das Verhältnis zwischen Stickstoffmonoxid und Stickstoffdioxiden in den Abgasen gemäß der Verbrennung des Motors geschätzt wird,
und, wenn das Reduktionsmittel auf der Basis von Harnstoff $CO(NH_2)_2$ ist, der Zerfall des Harnstoffs bei Vorliegen von Wasser und hoher Temperatur in Ammoniak $NH_3$ und Kohlenstoffdioxid $CO_2$ gemäß der folgenden chemischen Reaktion berücksichtigt wird:

$$CO(NH_2)_2 + H_2O \rightarrow 2\ NH_3 + CO_2.$$

7. Rechner, **dadurch gekennzeichnet, dass** er die Mittel zum Umsetzen eines Berechnungsverfahrens nach einem der vorhergehenden Ansprüche umfasst, mit Berechnungs- und Speichermitteln der Sauerstoffmengen am Eingang des Motors, Stickstoffoxidmengen am Ausgang des Motors in Abhängigkeit von den gespeicherten Sauerstoffmengen, Reduktionsmittelmengen, die für die Neutralisierung der Stickstoffoxidmengen am Ausgang des Motors erforderlich sind, wobei der Rechner Mittel zum Erfassen eines Betriebs des Motors in Sauerstoffpriorität oder RGE-Priorität, Mittel zum Berechnen und Speichern der Reduktionsmittel-Verbrauchsunterschiede ($\Delta$ Qinj RCS) zwischen Luftpriorität und RGE-Priorität in Abhängigkeit von den Reduktionsmittelmengen, die für die Neutralisierung der berechneten Stickstoffoxidmengen am Ausgang des Motors erforderlich sind, und Mittel zum Summieren der aufeinanderfolgenden Verbrauchsunterschiede ($\Delta$ Qinj RCS) für das Erhalten des Gesamtverbrauchsunterschieds an Reduktionsmittel (G Qinj RCS cum) umfasst.

8. Motorbaugruppe, die einen Verbrennungsmotor mit einem Luftansaugstrang, einem Abgassystem, das ein System zur selektiven katalytischen Reduktion integriert, mindestens ein Rückführungssystem der Abgase zu dem Frischluft-Ansaugstrang an einem Eingang des Motors ausgehend von einer Abzweigung auf dem Abgassystem, und eine Steuerungstechnik des Motors umfasst, die einen Verwaltungsblock mit Sollwertberechnungsmitteln des Luftdurchsatzes und Gehalte an rückgeführten Gasen am Eingang des Motors und Mittel zum Steuern bei Luftpriorität oder RGE-Priorität der Motorbaugruppe umfasst, **dadurch gekennzeichnet, dass** die Steuerungstechnik einen Rechner nach Anspruch 7 integriert.

9. Kraftfahrzeug, **dadurch gekennzeichnet, dass** es eine Motorbaugruppe nach Anspruch 8 und eine Mensch-Maschinen-Schnittstelle umfasst, die für einen Fahrer des Fahrzeugs sichtbar und in Reichweite ist, wobei diese Schnittstelle mit der Steuerungstechnik der Motorbaugruppe verbunden ist, wobei die Schnittstelle Mittel zum Empfangen des Gesamtverbrauchsunterschieds an Reduktionsmittel (G Qinj RCS cum) umfasst, der ihr von der Steuerungstechnik übertragen wird, eine Anzeigevorrichtung des Gesamtverbrauchsunterschieds an Reduktionsmittel (G Qinj RCS cum) und mindestens einen Steuerknopf, der mit Kommunikationsmitteln zu dem Verwaltungsblock der Steuerungstechnik verbunden ist, der es dem Fahrer erlaubt, zwischen einem Betriebsmodus des Motors, für den die Luftpriorität begünstigt wird, und einem Reduktionsmittel-Sparmodus, für den die RGE-Priorität begünstigt ist, auszuwählen.

10. Kraftfahrzeug nach Anspruch 9, wobei die Anzeigevorrichtung der Mensch-Maschinen-Schnittstelle auch den Luft- oder RGE-Prioritätsmodus, der für die gesamte Motorbaugruppe gilt, angibt.

**Claims**

1. A method for monitoring the consumption of reducing agent delivered by a selective catalytic reduction system present in an exhaust line at the outlet of an internal combustion engine for the reduction of the nitrogen oxides contained in exhaust gases evacuated by the line, the internal combustion engine being associated with a recirculation system of the exhaust gases towards a fresh air intake line at an inlet of the engine, the recirculated exhaust gases being mixed with fresh air in variable proportion by regulation established according to a priority given to the filling with air at the intake of the engine, designated air priority, or to the filling with a higher rate of recirculated gases, designated EGR priority, **characterized by** the following steps:

- calculation of an amount of oxygen admitted at the inlet of the engine respectively in air priority (%02 PA) and EGR (%02 PEGR) before a combustion in the engine.
- calculation of an amount of nitrogen oxides leaving the engine through the exhaust line in air priority (NOx S PA) and EGR (NOx S PEGR) after the combustion,
- calculation of a consumed amount of reducing agent necessary for the neutralization of the amount of nitrogen oxides contained in the gases (NOx S PA, NOx S PEGR) leaving through the exhaust line after the combustion as a function of the calculated amount of nitrogen oxides respectively in air priority (NOx S PA) and EGR (NOx S PEGR),
- calculation of a consumption difference ($\Delta$ Qinj SCR) between the amounts of reducing agent injected in air priority and EGR priority, then addition of the accumulated consumption differences for successive combustions for a predetermined duration to establish a total consumption difference of reducing agent (G Qinj cum SCR).

2. The method according to Claim 1, in which for each air or EGR priority the amount of oxygen (%02 PA, %02 PEGR) is calculated as a function of an oxygen flow at the inlet of the engine respectively in air or EGR priority, this oxygen flow being the sum of a flow of air (Deb A PA, Deb A PEGR) brought back at the inlet of the engine in oxygen (O2 A) and of a flow of recirculated gases (Deb EGR PA, Deb EGR PEGR) which a respective correction variable (O2 EM PA, 02 EM PEGR) multiplies for an air or EGR priority being expressed according to the following formula:

$$O2\ EM\ PA = (\%O2\ PA - 14.5.\ 0.2135.\ Debinj\ C)/Deb\ G\ tot\ PA + Debinj\ C)$$

for an air priority or

$$O2\ EM\ PEGR = (\%O2\ PEGR = 14.5.\ 0.2135.\ Debinj\ C)/Deb\ G\ tot\ PEGR + Debinj\ C)$$

for an EGR priority
with %02 PA or %02 PEGR being the rate of oxygen respectively in air or EGR priority, Debinj C being the flow of injected fuel and Deb G tot PA or Deb G tot PEGR being the total gas flow respectively in air or EGR priority, the conversion variable (O2 EM PA, 02 EM PEGR) being calculated downstream on the amount of oxygen (%02 PA or %02 PEGR) previously calculated.

3. The method according to Claim 2, in which, for each air or EGR priority, the calculation of the amount of nitrogen oxides (NOx S PA, NOx S PEGR) at the outlet of the engine is carried out as a function of the amount of oxygen (%02 PA, %02 PEGR) calculated according to the formula:

$$NOx\ S\ PA/NOx_{stab} = 10^{A.(\%O2\ PA\ -O2stab)}$$

for an air priority or

$$NOx\ S\ PEGR/NOx_{stab} = 10^{A.(\%O2\ PEGR\ -O2stab)}$$

for an EGR priority
the values 02stab and NOxstab being the stabilized values of oxygen and of nitrogen oxides established during the development of the engine and A being a coefficient specific to the engine.

4. The method according to Claim 3, in which the stabilized values of oxygen and of nitrogen oxides (02stab, NOxstab) are established as a function of an engine speed (Rm) and of an engine torque setpoint (Cc) .

5. The method according to any one of the preceding claims, in which the calculation of a consumed amount of reducing agent is carried out from the calculated amount of nitrogen oxides (NOx S PA or NOx S PEGR) leaving the engine and according to chemical reaction(s) of neutralization of the nitrogen oxides in the exhaust line.

6. The method according to Claim 5, in which, when the reducing agent is ammonia-based, the following reactions of ammonia $NH_3$ are taken into account, which reacts with the nitrogen oxides in the form of nitrogen monoxide NO and nitrogen dioxide $NO_2$ according to the reactions:

$$4\ NO + 4\ NH_3 + O_2 \rightarrow 4\ N_2 + 6\ H_2O$$

$$2\ NO + 4\ NH_3 + 2NO_2 \rightarrow 4\ N_2 + 6\ H_2O$$

the ratio between nitrogen monoxide and nitrogen dioxides in the exhaust gases being estimated according to the combustion of the engine,
and when the reducing agent is urea-based $CO(NH_2)_2$, the decomposition of the urea is taken into account, in the presence of water and at raised temperature, to ammonia $NH_3$ and carbon dioxide $CO_2$ according to the chemical reaction:

$$CO(NH_2)_2 + H_2O \rightarrow 2\ NH_3 + CO_2$$

7. A computer, **characterized in that** it includes the means for implementation of a calculation method according to any one of the preceding claims, with means for calculating and storing the amounts of oxygen at the inlet of the engine, the amounts of nitrogen oxide at the outlet of the engine as a function of the stored amounts of oxygen, the amounts of reducing agent necessary for the neutralizing of the amounts of nitrogen oxides at the outlet of the engine, the computer including means for detection of an operation of the engine in air or EGR priority, means for calculating and storing the differences in consumption of reducing agent ($\Delta$ Qinj SCR) between the air and EGR priorities as a function of the amounts of reducing agent necessary for the neutralizing of the calculated amounts of nitrogen oxides at the outlet of the engine and summation means of the successive differences in consumption ($\Delta$ Qinj SCR) for obtaining the total difference in consumption of reducing agent (G Qinj cum SCR) .

8. An engine assembly including an internal combustion engine with an air intake line, an exhaust line integrating a selective catalytic reduction system, at least one system for recirculation of the exhaust gases towards the fresh air intake line at an inlet of the engine from a tapping on the exhaust line and a control command of the engine including a management block with calculation means of air flow setpoints and of rate of recirculated gases at the inlet of the engine and drive means in air or EGR priority of the engine assembly, **characterized in that** the control command integrates a computer according to Claim 7.

9. A motor vehicle, **characterized in that** it includes an engine assembly according to Claim 8 and a human/machine interface visible by and within reach of a driver of the vehicle, this interface being connected to the control command of the engine assembly, the interface including means for receiving the total consumption difference of reducing agent (G Qinj cum SCR) being transmitted to it by the control command, a display device of the total consumption difference of reducing agent (G Qinj) cum SCR) and at least one control button connected to communication means in the direction of the management block of the control command permitting the driver to select between a mode of operation of the engine for which the air priority is favoured and an economical mode of consumption of reducing agent for which the EGR priority is favoured.

10. The motor vehicle according to Claim 9, in which the display device of the human/machine interface also indicates the air or EGR priority mode in effect for the engine assembly.

**FIG.1**

O2 A = 23.15 %

**FIG.2**

O2 EM PRGE

Deb RGE PRGE

Deb A PRGE

O2 A

Deb O2 PRGE

Deb G tot PRGE

% O2 PRGE

$0^2$ A = 23.15 %

# FIG.3

%O2 PA

Rm

Cc

%O2 stab

A

Rm

Cc

NOx stab

10U

NOx S PA

# FIG.4

FIG.5

FIG.6

**EP 3 150 815 B1**

## RÉFÉRENCES CITÉES DANS LA DESCRIPTION

**Documents brevets cités dans la description**

- US 2013152549 A